Europäisches Patentamt

European Patent Office

Office européen des brevets

(11) Veröffentlichungsnummer: **0 402 488**

**A1**

## EUROPÄISCHE PATENTANMELDUNG

(21) Anmeldenummer: 89108289.3

(22) Anmeldetag: 09.05.89

(51) Int. Cl.5: **B60G 25/00, B60G 21/00, B60G 11/00, B60B 9/00, B61F 5/24, B63B 29/02, B64C 1/00**

Die Patentansprüche 9.2 - 9.9 und 10 - 16 gelten durch Nichtzahlung der Anspruchsgebühren als verzichtet (Regel 31 (2) EPÜ).

(43) Veröffentlichungstag der Anmeldung:
**19.12.90 Patentblatt 90/51**

(84) Benannte Vertragsstaaten:
**AT BE CH DE ES FR GB GR IT LI LU NL SE**

(71) Anmelder: **Teutsch, Rudolf**
**Moerser Strasse 32 a**
**D-4005 Meerbusch 1(DE)**

Anmelder: **Görgens, Erich**
**Auf dem Damm 1**
**D-4050 Mönchengladbach(DE)**

Anmelder: **Karlsson, Lars Ake**
**Box 12072**
**S-72012 Vasteras(SE)**

(72) Erfinder: **Görgens, Erich**
**Auf dem Damm 1**
**D-4050 Mönchengladbach(DE)**

(54) **Verfahren und Vorrichtung zur lastabhängigen Lagerung von Fahrzeugkörpern.**

(57) Die Erfindung betrifft ein Verfahren und Vorrichtungen zur lastabhängigen Lagerung von Fahrzeugkörpern (7.1, 7a) die zwischen oder auf Fahrzeugstützkörpern (1.1) derart -mittels Lenkern (5a, 5b), Stützelementen (3 oder 4) oder Lagerelementen (2, 2a)- gestützt, unverschiebbar gehalten werden, daß passiv-selbstregelnd, infolge von Kraftstößen oder Fliehkräften, entsprechend große Lager-, Gegen-, Rückstellkräfte erzeugt werden und ein kontrollierter Ausgleich erfolgt, ohne den Abstand der Fahrzeugstützkörper (1.1) zu verändern, sowie ohne Momente in den Lagerstellen zuzulassen.

Fig. 1

EP 0 402 488 A1

## Verfahren und Vorrichtung zur lastabhängigen Lagerung von Fahrzeugkörpern

Die Erfindung betrifft ein Verfahren und Vorrichtungen zur lastabhängigen Lagerung von Fahrzeugkörpern(7), die zwischen oder auf Fahrzeugstützkörpern(1) derart -mittels Lenkern(5), Stützelementen(3 oder 4) oder Lagerelementen(2)- gestützt, verschiebbar oder unverschiebbar gehalten werden, daß passive-selbstregelnd, infolge von Kraftstößen oder Fliehkräften, entsprechend große Lager-, Gegen-, Rückstellkräfte erzeugt werden und ein kontrollierter Ausgleich erfolgt, ohne den Abstand der Fahrzeugstützkörper(1) zu verändern, sowie ohne Momente in den Lagerstellen zuzulassen.

Eine Vorrichtung dieser Art ist aus dem Stand der Technik bekannt. Beispielsweise aus:

DE 30 48 755, A1, C2

DE 20 27 885, B2

DE 31 48 726, C1

DE 30 48 794, C1

usw.

Die in diesen Schriften beschriebenen Vorrichtung weist eine parallel zur vertikalen Systemachse geführte Radaufhängung mit Stäben auf, die eine Anzahl von Momenten aufweist und infolge vertikaler Kraftstöße immer eine Spurveränderung bzw. Auslenkung der Räder bewirkt.

Nachteilig ist dabei, daß einmal die Anpassungsfähigkeit der rechtwinkligen Radstellung zur Fahrbahnebene fehlt, was zu ungünstigen Reifenkennlinien bzw. Abrieben führen kann. Zum anderen führt die erzwungene Spurveränderung durch vertikale Kraft stöße zu wechselndem Beschleunigungsverhalten und Geschwindigkeiten, was u.a. auch den Fahrkomfort beeinträchtigt.

Darüberhinaus ist diese Radaufhängung zur Befahrung einer oft vorhandenen gewölbten Fahrbahn insbesondere mit breiten Reifen denkbar ungünstig, da somit je nach Krümmungsradius eine unvorteilhafte einseitige Abnützung der Reifen unumgänglich ist.

In Kurven erzwingt die Fliehkraft bei allen bekannten Ausführungen eine ungleiche Belastung der inneren bzw. äußeren Räder. Dieser Umstand beeinträchtigt neben dem Fahrkomfort auch die Fahrsicherheit und gleichmäßige Geschwindigkeit. Insbesondere bei Kurvendurchfahrt mit erhöhter Geschwindigkeit steigt dieses Risiko mit zunehmender kritischer Veränderung der Reifenkennlinie, die unter diesen Bedingungen nicht mehr linear verläuft und ihre ungünstige Belastungsart erfährt. Letztlich ist die resultierende Kraftwirkungslinie(RS) nicht aussteuerbar, was bei Rennwagen bis zur zeitweisen Bewußtlosigkeit des Fahrers und damit zu Unfällen führen kann.

Bei Eisenbahnwagen wirken sich die Fliehkräfte ebenfalls negativ auf den Fahrkomfort des Fahrgastes aus. Insbesondere weil modernere, schnellere Züge zukünftig höhere Geschwindigkeiten auf nicht ausreichend angepaßten, transeuropäischen Strecken erreichen sollen, ergibt sich die Notwendigkeit der Entkopplung des Wagenkastens, um diesen in Kurven auf die resultierende Kraftwirkungslinie(RS) auszusteuern. Bekannte passive Systeme sind entweder nicht ausreichend kontrolliert oder zu aufwendig. Die verwendeten aktiven Systeme verursachen einen hohen Aufwand und weisen erhebliche Störanfälligkeit auf.

Schiffe oder Flugzeuge weisen unerwünschte Bewegungen auf, die außer für Passagiere, insbesondere für den Transport gefährlicher oder empfindlicher Güter störend sind.

Der Erfindung liegt daher die Aufgabe zugrunde, ein Verfahren und eine Vorrichtung der eingangs genannten Art zu schaffen, deren Dämpfungscharakteristik unabhängig von der Richtung einer Relativverschiebung in allen Belastungsfällen optimal aussteuerbar ist und deren konstruktiver Aufbau einfach und zuverlässig ist.

Diese Aufgabe wird durch ein Verfahren zur lastabhängigen Lagerung von Fahrzeugkörpern dadurch gelöst, daß die Fahrzeugkörper über verschiebbare, energetisch gegenwirkende Gelenkketten derart auf den Rädern gestützt wird, daß -inneres Systemgleichgewicht anstrebend- eine gleichmäßige Radbelastung bei rechtwinkliger Anpassung der Radstellung an die Fahrbahn ohne Veränderung der Spurweite erreicht wird.

Ferner wird diese Aufgabe von einer Vorrichtung zur lastabhängigen Lagerung von Fahrzeugkörpern dadurch gelöst, daß die Gelenkkette -über eine Drehachse an den Radlagern begrenzt- in der senkrechten Ebene entlang der jeweiligen Achse eine energetisch kontrollierte -quasi freie- Verschiebung der Fahrzeugkörper zuläßt, welche dem Ausgleich von Systemkräften dient und so passiv-selbstregelnd, aussteuernd wirkt.

Durch die erfindungsgemäße Kinematik erfolgt die Aussteuerung vertikaler Kraftstöße durch vertikale Verschiebung der Fahrzeugkörper zwischen den Fahrzeugstützkörpern. Dabei verschieben sich Gelenkketten gegen Federn oder die von Lenkern oder Stützelementen vorgegebenen, energetischen Bewegungsbahnen, ohne eine Veränderung der Spurweite zu erzwingen. Im Falle einer Fahrbahnwölbung erfährt das Rad infolge der Auflagerkräfte eine resultierende Schrägstellung, so daß es rechtwinklig zur Fahrbahnebene steht. In diesem Fall tritt eine geringe Spurveränderung ein, die jedoch relativ gering ist, da sie von dem Dämpfungsfunktionen infolge von Kraftstößen vollkommen isoliert, nur den Anteil der Fahrbahnneigung ausgleicht.

Beim Durchfahren von Kurven werden die Fahrzeugkörper zwischen den daran angeordneten Drehachsen der Gelenkkette über die Massekraft ausgelenkt und die auf Gleichgewicht ausgerichtete Kinematik sorgt für gleichmäßige Belastung auf den inneren bzw. äusseren Rädern.

Im Vergleich zum Stand der Technik erfolgt die Aussteuerung der Wechselwirkung zwischen dem Fahrzeugkörper und dem Fahrzeugstützkörper nicht über eine mit der Radstellung gekoppelte Dämpfungsfunktion, sondern über eine ausreichend aus-, einklappbare Kinematik. Vorzugsweise 9 Drehachsen, von denen jeweils mindestens 5 relativ unverschiebbar an den Rädern oder dem Fahrzeugkörper einer Vorder- oder Hinterachse angeordnet sind, steuern die Lenker, über welche die Abstimmung auf die gewünschte Reaktion erfolgt.

Besondere Vorteile sind gekennzeichnet durch optimale Nutzung der Reifenkennlinie bzw. deren Optimierung, durch hohe Fahrsicherheit und Komfort, durch Aussteuerung der Fahrzeuginsassen oder Fracht auf die resultierende Kraftrichtung beim Durchfahren von Kurven, durch relativ gleichbleibende Spurweite, Radstellung sowie durch eine momentenfrei, dynamisch beruhigt funktionierende Kinematik.

Die Eisenbahnwagen betreffend wird diese Aufgabe dadurch gelöst, daß Lenker oder Stützelemente eine offene vorzugsweise trapezförmige, verschiebbare, passiv-energetisch kontrollierte Gelenkkette zwischen Drehgestell und Wagenkasten bilden. Über die Feder-, Arbeitsdrücke hinausgehende Beschleunigungskräfte bewirken darin eine resultierende Auslenkung. Der relativ tiefliegende Schwerpunkt(S) des Wagenkastens wird infolge Fliehkraftwirkung seitlich -in der X-Y Ebene- gegen die Feder-, Arbeitsdrücke wirkend, resultierend verschoben. Der Fahrgast empfindet so bei überhöhter Kurvengeschwindigkeit keine ihn auslenkende Kraft.

Die erfindungsgemäße, passiv kontrollierte, einfache Ausgleichsmechanik benötigt keine "Fremdenergie" und weist keine störanfälligen Bauteile auf. Dabei kann vorteilhaft eine Kopplung der Gelenkkette mit dem Schwingbalken und dem Gleitlager direkt mit dem Drehgestell erfolgen, um die in Längsrichtung erforderliche Funktion des Drehgestell-, Lagerzapfens in die Kinematik zu integrieren. Eine gleiche Funktion kann in Fahrtrichtung zur Kompensation der Brems- oder Beschleunigungskräfte vorgesehen werden.

Weitere bevorzugte Ausführungsformen sind in den Unteransprüchen wiedergegeben. Die Erfindung ist im Folgenden anhand einer mehrere Ausführungsbeispiele zeigenden Zeichnung erläutert. Dabei zeigen:

Fig. 1

die Ansicht eines ersten Ausführungsbeispiels als Hinterachse für beliebige Kraftfahrzeuge

Fig. 2

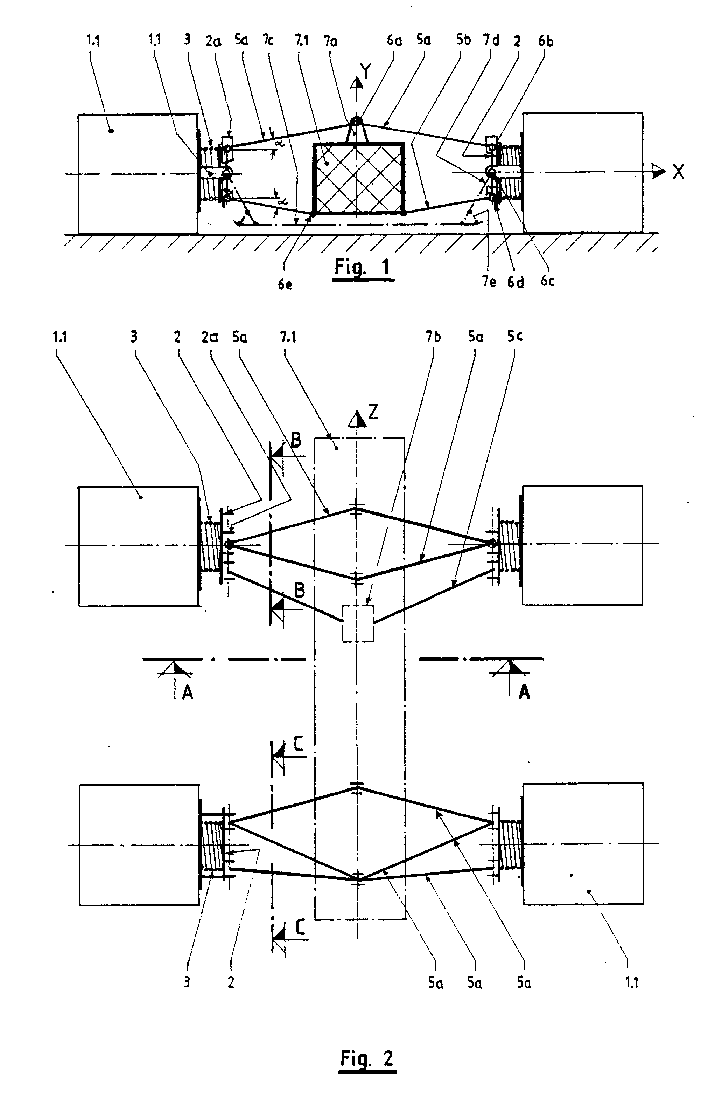

eine Draufsicht auf ein beliebiges Fahrzeug nach Fig. 1

Fig. 3

ein Rad mit Radlager einer Hinterachse nach Schnitt C-C in Fig. 2

Fig. 4

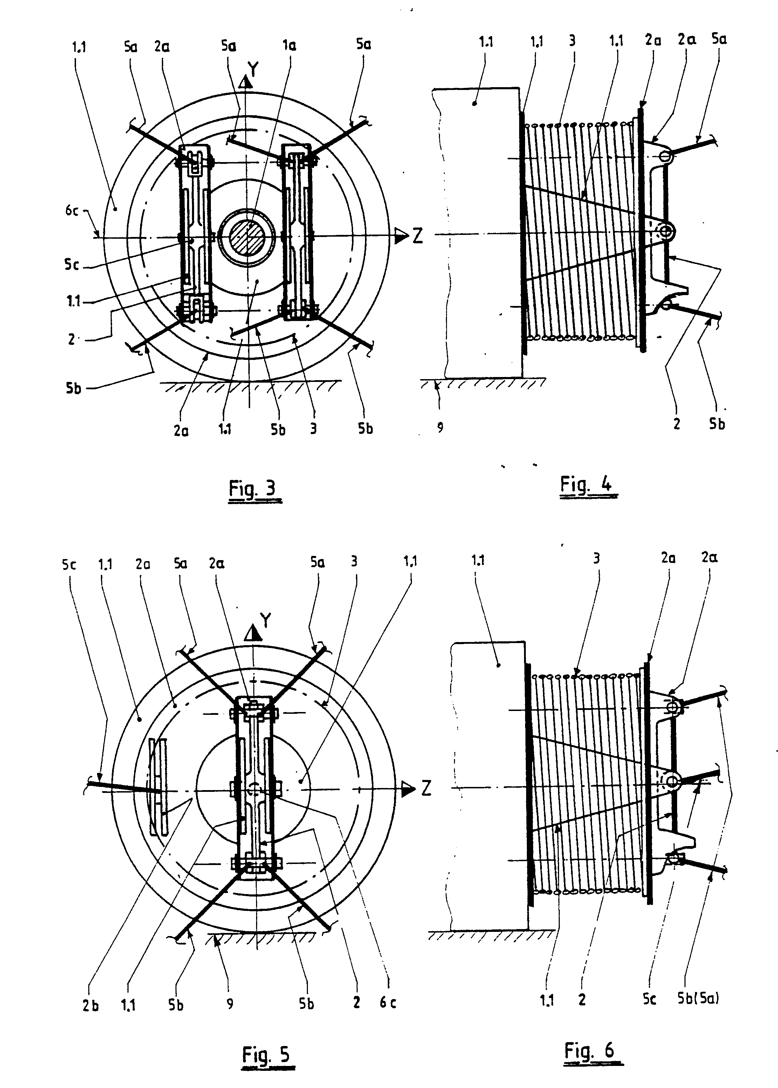

eine Seitenansicht von Fig. 3

Fig. 5

ein Rad mit Radlager einer Vorderachse nach Schnitt B-B in Fig. 2

Fig. 6

eine Seitenansicht von Fig. 5

Fig. 7

einen Schnitt A-A nach Fig. 2 als Vorderachse

Fig. 8

ein Funktionsschema gemäß Fig. 1, bei vertikaler Fahrbahnveränderung

Fig. 9

ein Funktionsschema gemäß Fig. 1, bei einem Fahrbahnhindernis

Fig. 10

ein Funktionsschema gemäß Fig. 1, bei gewölbter Fahrbahn

Fig. 11

ein Funktionsschema gemäß Fig. 1, beim Durchfahren einer nicht ausreichend ausgebauten Kurve

Fig. 12

ein drittes Ausführungsbeispiel, jedoch als Wagenkastensteuerung mit Lenker und Federelementen

Fig. 13

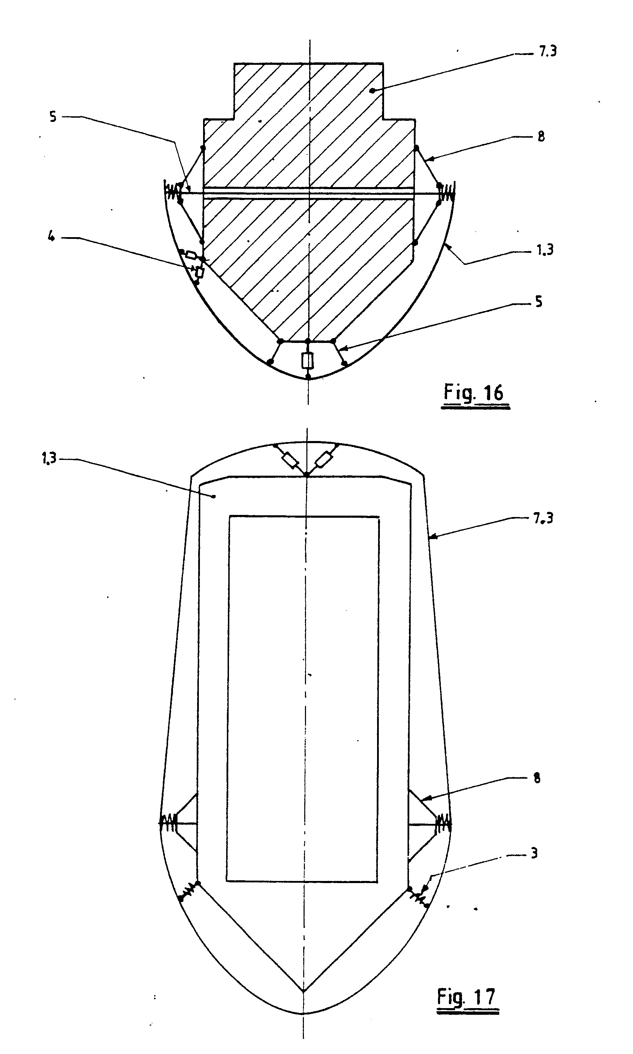

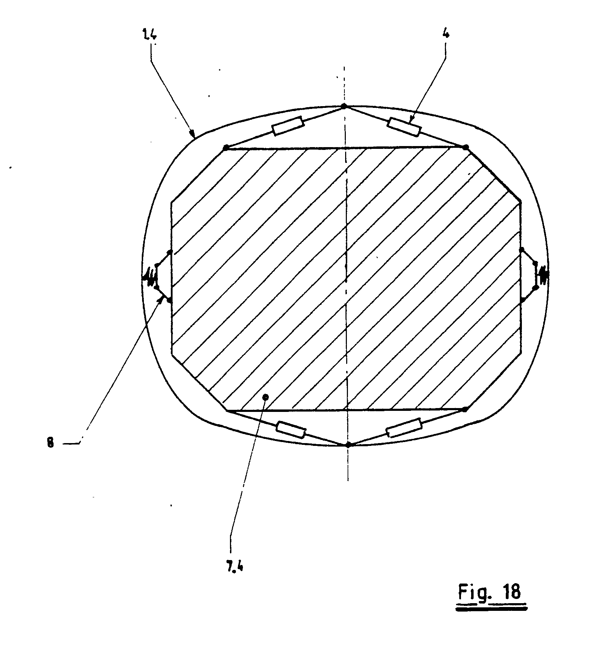

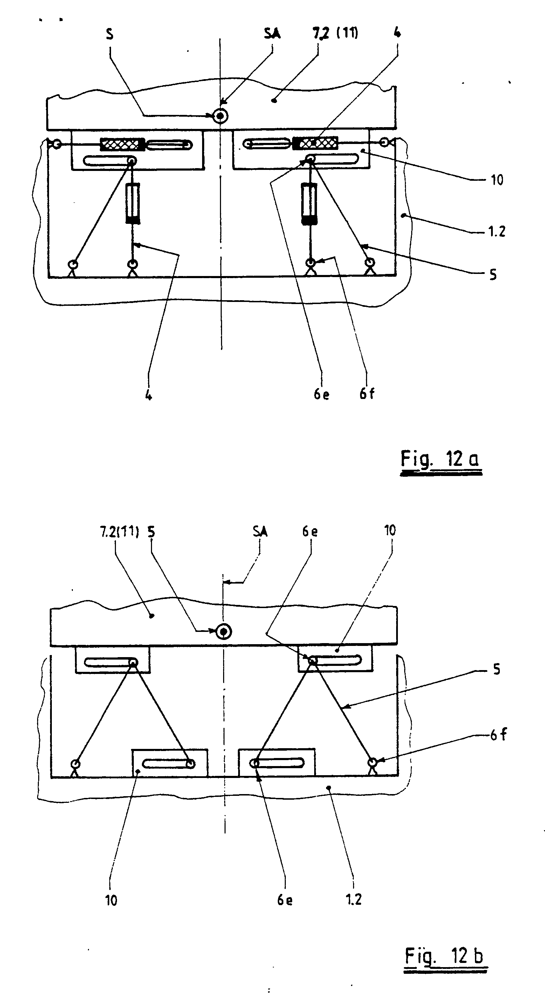

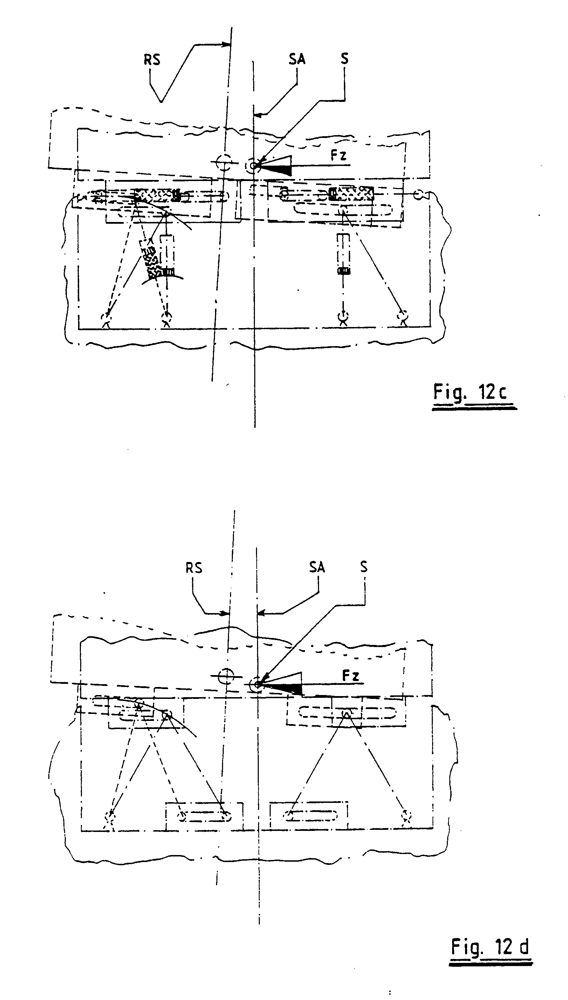

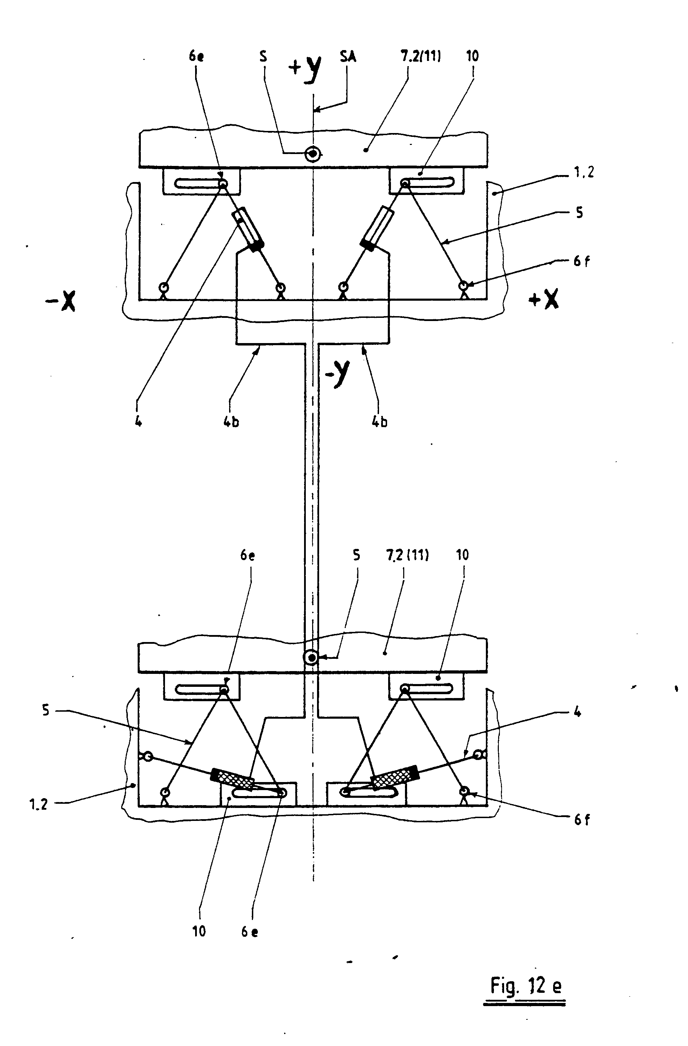

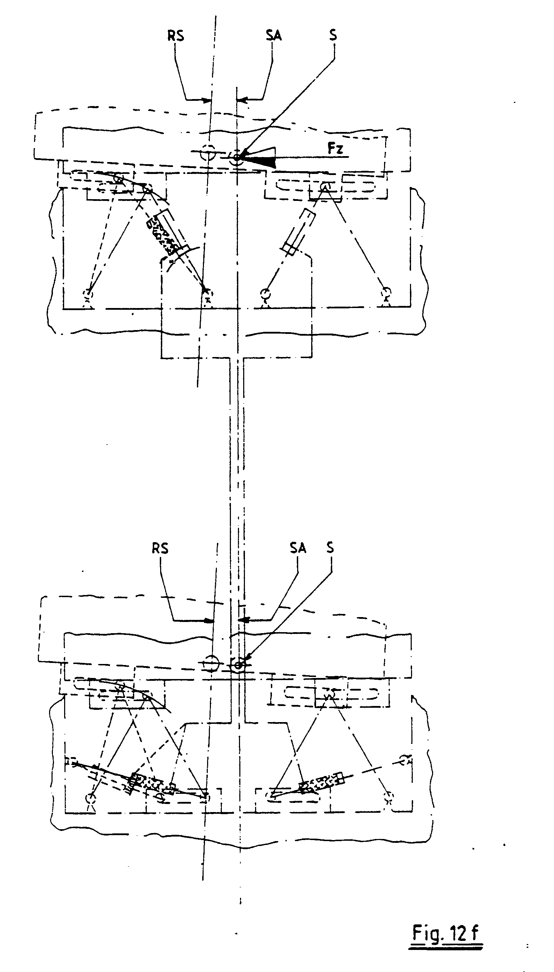

ein viertes Ausführungsbeispiel in Anlehnung an Fig. 12, jedoch mit Kolben-, Zylindersystemen

Fig. 14

ein Funktionsschema gemäß Fig. 12

Fig. 15

ein Funktionsschema eines Wagenkastens ohne passive Aussteuerung

Fig. 16

ein fünftes Ausführungsbeispiel für ein Schiff'in einem beliebigen Querschnitt

Fig. 17

eine Draufsicht von Fig. 16

Fig. 18

ein sechstes Ausführungsbeispiel für ein Flugzeug in einem beliebigen Querschnitt

siehe Blatt -7a-

Fig. 1

zeigt ein Ausführungsbeispiel einer Hinterachse für ein Kraftfahrzeug, hier insbesondere für einen Rennwagen. Besondere Merkmale sind:

i) eine Drehachse(6c) zwischen Rad(1.1) und Lagerelement(2) gegen einen beliebige Feder(3) wirkend, wodurch die Gelenkkette(8a) lastabhängig, energetisch kontrolliert wird

ii) ein Ausgleichselement(2a), welches -über die Drehachsen(6b, 6d) auf Feder(3) wirkend- dafür sorgt, daß bei Änderung der Anstellwinkel alpha, bzw. bei Auslenken der Lenker(5a oder 5b) ein gleichmäßiger Federweg beansprucht wird.

iii) eine gemeinsame Drehachse(6a) an Lager(7a) für Lenker(5a), was eine Rotationsbewegung der Fahrzeugkörper(7.1) in Kurven, zur Einstellung auf die resultierende Kraftwirkungsrichtung begünstigt

iv) ein Bodenblech(7c) ist über Lenker(7d), elastische Lenker(7e) und Drehachse(6c) gelagert und wird dadurch sich selbstregelnd, passiv gesteuert auf relativ konstantem Abstand zur Fahrbahn (9) gehalten

Fig. 2

zeigt eine Draufsicht, woraus ersichtlich ist, daß Vorder- und Hinterachse unterschiedliche Gelenkketten(8a und 8b) darstellen. Ein Lenkgestänge(5c) führt zum Lenkgetriebe(7b) der Vorderachse.

Fig. 12a

ein sibtes Ausführungsbeispiel in Anlehnung an Fig. 12 als Gelenkkette (8)

Fig. 12b

ein achtes Ausführungsbeispiel wie Fig. 12a

Fig. 12c

ein Funktionsschema gemäß Fig. 12a

Fig. 12d

ein Funktionsschema gemäß Fig. 12b

Fig. 12e

ein neuntes Ausführungsbeispiel in Anlehnung an Fig. 12a, jedoch über zwei Stützebenen gekoppelte Gelenkketten (8a)

Fig. 12f

ein Funktionsschema der gekoppelten Stützebenen gemäß Fig. 12e.

Fig. 3

zeigt ein Hinterrad(1.1) mit Lagerelement(2), was je einmal links und rechts vom Radmittelpunkt bzw. der Antriebswelle(1a) angeordnet ist. Stattdessen könnte auch ein beliebig ausgebildetes, kompaktes Lagerelement(2) über die Drehachse(6c) gelagert sein. Ein Ausgleichselement(2a) wirkt gegen Feder(3). Die Lenker(5a) wirken über die Lagerelemente(2) in Z-Richtung unverschiebbar.

Fig. 4

wie Fig. 3, jedoch als Seitenansicht, wobei Lagerelemente(2) Lenkern(5a oder 5b) mit zusätzlichem Drehpunkt gleichen.

Fig. 5

wie Fig. 3, jedoch als Vorderrad(1.1) mit Lagerelementen(2) und einem separaten, zusätzlichen Lagerelement(2b) für Lenkgestänge(5c). Sphärische Lager der Lenker(5a) ermöglichen eine Drehung des Rades(1.1) um die Y-Achse über das Lenkgestänge(5c) und um die Z- Achse gegen Feder(3) wirkend.

Fig. 6

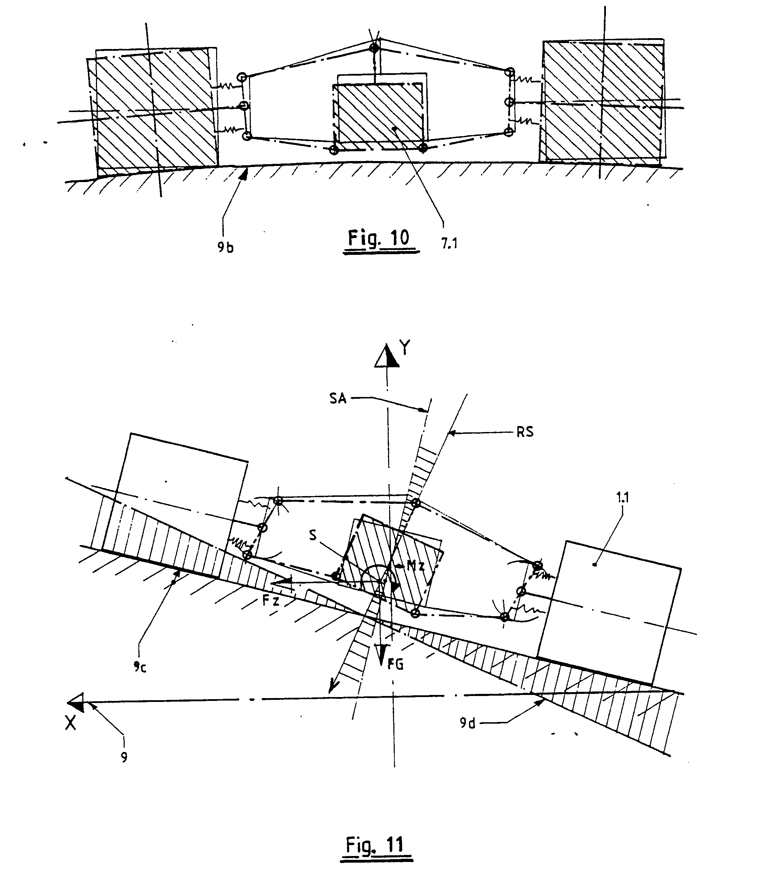

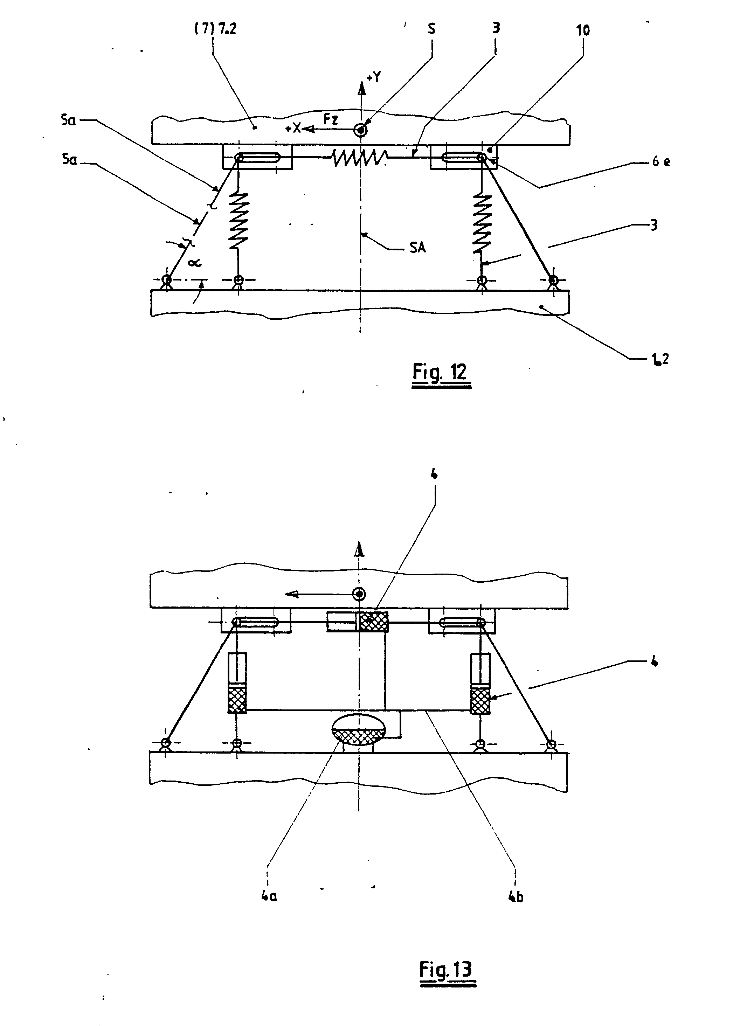

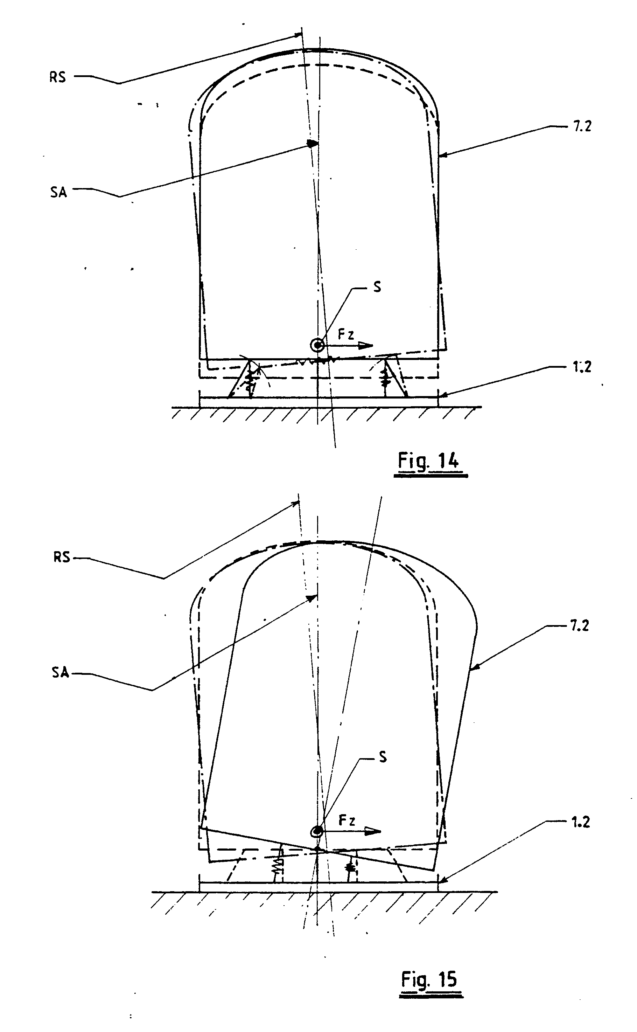

wie Fig. 5, jedoch als Seitenansicht. Dabei gilt wie bei den Fig. 3, 4 oder 5, daß das Rad(1.1) über Drehachse(6c) gegen Feder(3) wirkend, unabhängig bzw. von den Lenkern(5a, 5b) entkoppelt, eine Rotation um die Z-Achse infolge Fahrbahnveränderung durchführen kann. Dazu zeigt Fig. 9 ein Funktionsschema.

Fig. 7

zeigt eine Vorderachse gemäß Schnitt A-A nach Fig. 2, dabei wird deutlich, daß das Lenkgestänge(5) nicht in gleicher Richtung wie die Lenker(5a oder 5b) verlaufen muß, obgleich auch dies möglich ist.

Fig. 8

zeigt ein Funktionsschema einer Vorder- oder Hinterachse, wobei die Verschiebefigur bzw. Auslenkung infolge einer gleichmäßig welligen Fahrbahn(9e) entsteht.

Fig. 9

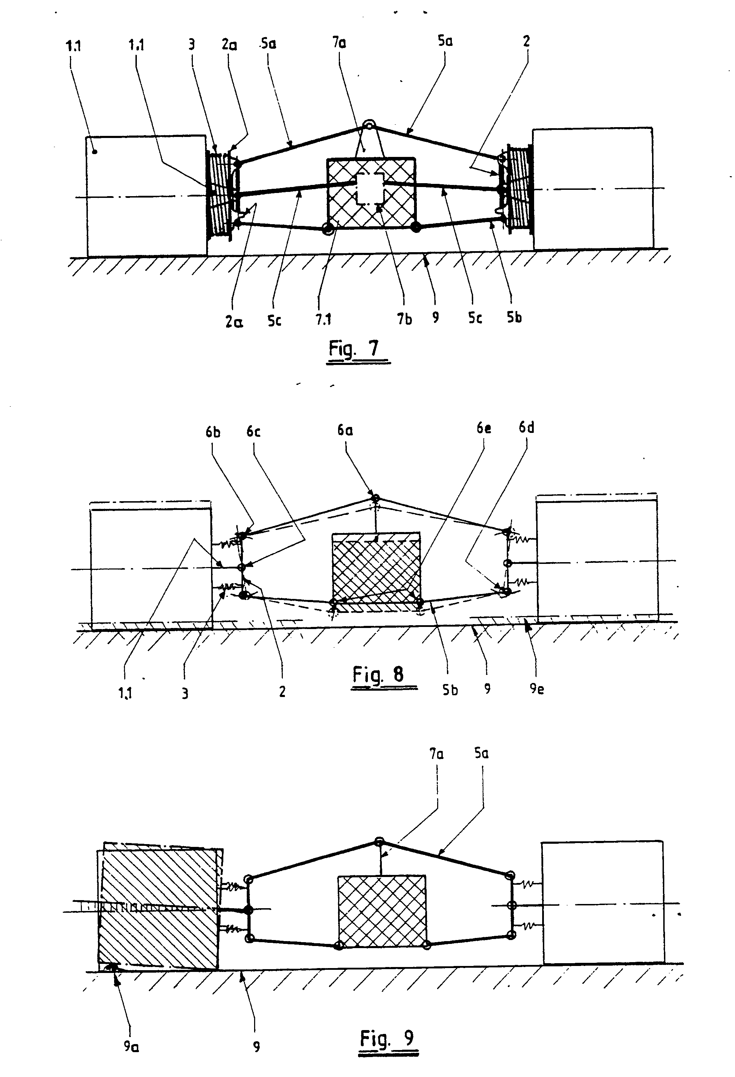

wie Fig. 8, jedoch ein Funktionsschema zur Reaktion infolge eines Fahrbahnhindernisses(9a).

Fig. 10

wie Fig. 8 oder 9, jedoch bei einer gewölbten Fahrbahn(9b). Die hier gezeigte resultierende Verschiebung des Fahrzeugkörpers(7.1) kann beliebig anders abgestimmt werden, was gemäß dem Verfahrensanspruch-(3) näher beschrieben ist.

Fig. 11

zeigt eine nicht ausreichend ausgebaute Kurve(9c), welche beim Durchfahren mit relativ überhöhter Geschwindigkeit erfindungsgemäß derart ausgeglichen wird, daß eine zu (9d) äquivalente Situation erreicht wird. D.h., durch die Kinematik der Gelenkkette(8) erfolgt ein Ausgleich bezüglich der Radbelastung und der Verschiebung auf die resultierende Kraftwirkungslinie(RS). In allen Fällen kann auf eine Veränderung der Spurweite verzichtet werden -außer bei (9a)-. Die auf Gleichgewicht ausgerichtete Gelenkkette(8) bewirkt eine gleichmäßige Lastverteilung auf innere und äußere Räder(1.1).

Fig. 12

zeigt einen Wagenkasten(7.2), der auf einem Drehgestell(1.2) derart gestützt ist, daß vertikale Kraftstöße über Drehachsen(6e) eine Auslenkung der Lenker(5a) und Federn(3) am Gleitlager(10) des Schwingbalkens-(1) bewirkend, gedämpft werden. Infolge einer Fliehkraftwirkung in Kurven dreht der Wagenkasten(7.2) die Lenker(5a) jeweils gegen die Federn(3) wirkend, absenkend oder ansteigend bis zur Erreichung der resultierenden Kraftwirkungsrichtung(RS). Lagerzapfen (12) ist im Schwingbalken(11) drehbar gelagert und mit dem darauf aufliegenden Wagenkasten(7.2) gekoppelt, so daß die Funktion des Drehgestells(1.2) sichergestellt bleibt. Erfindungsgemäß ist aber auch eine Umkehrung der in Fig. 12 gezeigten Anordnung möglich. In dem gezeigten Beispiel sind die Lenker(5a) zweiwertig ausgebildet bzw. an geordnet. D.h. in einer Seitenansicht wären je zwei, auf die gemeinsame Drehachse(6e) zulaufende Lenker(5a) sichtbar.

Fig. 13

wie Fig. 12, jedoch wurden hier die Federn(3) gegen Kolben-, Zylindersysteme(4) und ein Ausgleichsgefäß-(4a) ausgetauscht. Leitungen(4b) ermöglichen einen Kurzschluß zur Anpassung der Charakteristik. Masse-, Stromregler(4c) ermöglichen es, eine Verzögerung über die Kurzschlußstrecke herzustellen.

Fig. 14

wie Fig. 12 oder 13, jedoch als Funktionsschema, wobei die vertikale Auslenkung in der Translation gestrichelt und die Auslenkung in der Rotation strich-punktiert dargestellt ist.

Fig. 15

zeigt ein Funktionsschema des nicht erfindungsgemäß -nur durch Federn(3)- gedämpften Wagenkastens (7.2), wobei deutlich wird, daß die Fliehkräfte eine Auslenkung in die falsche Richtung bewirken. Der relativ tief liegende Schwerpunkt(S) bewirkt erfindungsgemäß die strich-punktierte gewünschte Auslenkung. Die Ruhelage ist gestrichelt dargestellt.

siehe Blatt (10a)

Fig. 16

zeigt Schiffseinbauten(7.3), die über beliebige Gelenkketten(8), Lenker(5), Stützelemente(3 oder 4) oder Lagerelemente(2) mit dem Schiffsrumpf(1.3) derart gekoppelt sind, daß Bewegungen infolge Meerwellendynamik zunächst von den Schiffseinbauten(7.3) entkoppelt und dann ausgleichend, nahezu gänzlich kompensierbar sind. Die Entkopplung erfolgt über die Trennung der Einbauten(7.3) vom Rumpf(1.3). Der Ausgleich bzw. die Kompensation erfolgt durch Gelenkketten(8) oder damit ergänzend zusammenwirkende Stützelemente(3 oder 4) an beliebigen Stellen oder über beliebige Ebenen X, Y oder Z wirkend. Lenker(5) stabilisieren den Rumpf(1.3) an den Stellen, die aufgrund der Geometrie oder Lagerbedingung relativ instabil sind.

Fig. 12a zeigt wie Fig. 12 bis 15, wie Körper (7, 7.1 ----- 7n), (11) oder (1, 1.1 ----1n) passiv kontrolliert, lastabhängig, selbstregelnd, auf die resultierende Kraftwirkungslinie (RS) einer gerichteten Kraft (Fz) aussteuerbar ist.

Im Unterschied zu Fig. 13 sind hier zwei zusätzliche Drehachsen (6e) vorhanden und andere Anstellwinkel (α) gewählt. Wesentlich ist jedoch, daß gemäß Fig. 12a einseitig wirkende, vertikale Kräfte keine Auslenkung bzw. horizontale Verschiebung bewirken können. Dies wird dadurch erreicht, daß in der Ausgangs — oder Grundstellung, die vorzugsweise horizontal stützenden Stützelemente (4) vollständig aus — und die vorzugsweise vertikal stützenden Stützelemente (4) — eingefahren sind. Und dadurch, daß Stützelemente (4) nur in einer bestimmten Kraftwirkungsrichtung aktivierbar ausgebildet, angeordnet oder gekoppelt sind.

Fig. 12b zeigt relativ gleiche Funktion wie Fig. 12a, jedoch nur mit Lenkern (5) und zwei zusätzlichen Drehachsen (6e). Obgleich keine elastisch wirkende Stützelemente (3 oder 4) vorhanden sind, ist die kinematische Funktion relativ gleichwertig, da die energieminimierende, bewegungsbegrenzende, oder kontrollierende Funktion im wesentlichen durch das Anheben von Schwerpunkt (S) über die von den Lenkern (5) erzwungene Bewegungsbahn erreicht wird.

Fig. 12c zeigt ein Funktionsschema zu Fig. 12a

Fig. 12d zeigt ein Funktionsschema zu Fig. 12b

Fig. 12e zeigt quasi zwei Stützebenen wie in Fig. 12a bis 12d, jedoch als Gelenkketten (8a) ausgebildet und über Leitungen (4b) gekoppelt.

Einzeln sind diese Gelenkketten (8a) bzw. Stützebenen quasi unverschiebbar, stützend wirksam.
Über die Kopplungsfunktion (4b) wirken sie wie
Fig. 12a jeweils als vollwertige Gelenkketten (8).

Gemäß Fig. 12e lassen sich synchrone Bewegungen erzeugen und Stützelemente (4 oder 3)
einsparen. Zusätzlich können Ausgleichsgefäße
(4a) oder beliebige Elemente (4c) eingesetzt werden, um weitere Funktionen, etwa Dämpfung,
zu erreichen.

Ein gemäß Fig. 12e gelagerter Wagenkasten (7.2)
kann so beliebige Kurven mit beliebiger Neigung
und beliebiger Geschwindigkeit durchfahren ohne
eine von der resultierenden Kraftwirkungslinie
(RS) abweichende Auslenkung zu erfahren. Besonders vorteilhaft ist dabei, daß nur die Drehgestelle (1.2) dazu durch Stützelemente (3 oder 4)
und Lenker (5) sowie Gleitlager (10) zu ergänzen
sind. Und, daß nur zwei Stützelemente (3 oder 4)
je Drehgestell (1.2) erforderlich sind, da eine synchrone Funktion ohnehin Voraussetzung ist.

Erfindungsgemäß können solche Gelenkketten
(8 oder 8a) zwischen Beliebigen Körpern (7, 7.1 .... 7n)
(11) oder (1, 1.1 .... 1n) wirkend, genutzt werden.
Etwa bei Handhabungsgeräten lassen sich dabei
Positionierungen last — oder ortsabhängig leicht
erfassen oder einstellen. D.h., die Kinematik gibt
geometrisch — geographisch — oder energetisch relevante IST — Daten unmittelbar (ohne Reaktionszeitverlust) ab, oder ist auf SOLLWERTE direkt ansteuerbar. In solchen Fällen ersetzt das passive System
die Rechnereinheit aktiver Systeme vollwertig.

Fig. 12f zeigt ein Funktionsschema gemäß
Fig. 12e.

Fig. 17

zeigt eine Draufsicht von Fig. 16, wobei wiederum der Freiraum zwischen Einbauten(7.3) und Rumpf(1.3) deutlich wird. Gelenkketten(8) oder Stützelemente(3 oder 4) werden erfindungsgemäß vorzugsweise dort angeordnet, wo die Systemsymmetrie. Relativverschiebungen oder Massekonzentrationen dies erfordern.

Fig. 18

zeigt eine Flugzeugkabine(7.4) in einem beliebigen Querschnitt, die über Gelenkketten(8) oder Stützelemente(3 oder 4) gegenüber dem Rumpf(1.4) derart gelagert ist, daß Beschleunigungen etwa wie beim Wagenkasten(7.29 gedämpft oder ausgesteuert werden. Auf diese Weise lassen sich auch Schwingungen zwischen den relativ inneren Fahrzeugkörpern(7) und den relativ äußeren Fahrzeugstützkörpern(1) isolieren, dämpfen oder vermeiden. Erfindungsgemäß wird es immer möglich sein, Relativverschiebungen statischer, quasi statischer oder dynamischer Art von relativ äußeren nach relativ inneren Strukturen(1 oder 7) oder analog umgekehrt, ausgleichend zu kompensieren oder infolge Beschleunigung zu erzeugen, um ein Systemgleichgewicht aufrecht zu erhalten oder einzustellen.

## Ansprüche

· 1. Verfahren und Vorrichtung zur lastabhängigen Lagerung von Fahrzeugkörpern(7) gegenüber Fahrzeugstützkörpern(1), mittels Lenkern(5), Stützelementen(3 oder 4) oder Lagerelementen(2), welche die Fahrzeugkörper(7) lastabhängig, verschiebbar stützen, **dadurch gekennzeichnet,** daß Fahrbahnstützkörper(7) über Lenker(5), Stützelemente(3 oder 4) oder Lagerelemente(2) derart mit oder zwischen Fahrzeugstützkörpern(1) gekoppelt sind, daß eine statisch geschlossen, quasistatisch verschiebbar, dynamisch elastisch, rückstellend auslenkend, stützend reagierende Gelenkkette(8) entsteht, welche über alle Anlenkpunkte(6) lastabhängig, energetisch kontrolliert, für Fahrzeugkörper(7) Freiheitsgrade der Translation und Rotation in der Wirkungsebene aufweist oder dadurch, daß der Abstand zwischen Fahrzeugstützkörpern(1) konstant gehalten wird, während Beschleunigung in Relativverschiebung umgewandelt wird oder Relativverschiebungen gegenüber einer Sollage kompensiert werden oder eine analog umgekehrte Funktion erreicht wird.

2. Verfahren nach Anspruch 1,
**dadurch gekennzeichnet,** daß beliebige Fahrzeugkörper(7) oder Fahrzeugstützkörper(1), beliebige Gelenkketten(8) aufweisen, welche in einer, zwei oder drei Ebenen eines Raumes zur Wirkung kommen, jeweils symmetrisch zu Fahrzeugkörper(7) oder Stützkörpern(1) ausgebildet sind oder synchron darüber zusammenwirken.

3. Verfahren nach Anspruch 1 oder 2,
**dadurch gekennzeichnet,** daß die Abstimmung der Gelenkketten(8) über die Wahl von Längen, Spannkraft, Arbeitsdruck, Kurzschlußstrecken, Ausgleichsgefäßen, Massestrombeeinflußung oder Anstellwinkel alpha der Lenker(5) oder Stützelemente(3 oder 4) erfolgt, über die Abstände der Drehachsen(6) vorgenommen wird, oder durch zusätzliche Lenker(5) oder Stützelemente(3 oder 4) bewirkt wird.

4. Vorrichtung nach Anspruch 1 bis 3,
**dadurch gekennzeichnet,** daß Fahrzeugkörper(7) Kraftfahrzeuge(7.1) darstellen, die über Lenker(5), Stützelemente(3 oder, 4) und Lagerelemente(2) derart zwischen Rädern(1.1) gekoppelt sind, daß eine Gelenkkette(8a oder 8b) entsteht, welche lastabhängig, energetisch kontrolliert, als Hinter- oder Vorderachse dienend, inder Wirkungsebene X, Y ausgleichende Verschiebungen des Kraftfahrzeugkörpers in der Rotation oder Translation zuläßt, wobei die Spurweite zwischen den Rädern(1.1) konstant gehalten wird.

5. Vorrichtung nach Anspruch 4,
**dadurch gekennzeichnet,** daß das Lagerelement(2) zwei Drehachsen(6b, 6d) aufweist, an welchen Lenker(5) angelenkt sind und eine Drehachse(6c), an der das Rad(1.1) oder ein Bodenblech(7a) über Lenker(7b oder 7e) angelenkt ist oder dadurch, daß das Rad(1.1) über sphärische Lager der Lenker(5) in den Drehachsen(6b, 6d) über Lenkgestänge(5c) um die Y-Achse wirkend, auslenkbar ist.

6. Vorrichtung nach Anspruch 4 oder 5,
**dadurch gekennzeichnet,** daß Lenker(5) zwei Räder(1.1) bzw. zwei Lagerelemente(2) über eine gemeinsame Drehachse(6a) und je eine Drehachse(6b) verbinden oder dadurch, daß ein Ausgleichselement(2a) über Drehachsen(6b, 6d) auf Stützelemente(3 oder 4) angleichend wirkt.

7. Vorrichtung nach Anspruch 4 bis 6,
**dadurch gekennzeichnet,** daß elastisch wirkende Stützelemente zwischen Rad(1.1) und dem Radlager(2) oder einer Drehachse(6) am Kraftfahrzeugkörper(7.1) einer Verschiebung der Lenker(5) lastabhängig entgegenwirkend, angeordnet sind oder dadurch, daß statt Lenker(5) Stützelemente(3 oder 4) zur Anwendung kommen.

8. Vorrichtung nach einem der Ansprüche 4 bis 7,

**dadurch gekennzeichnet,** daß Fahrzeugkörper(7) Wagenkästen(7.2) oder Schwingbalken(11) darstellen und Fahrzeugstützkörper(1) Drehgestelle(1.2) darstellen, welche mit Lenker(5) oder Stützelementen(3 oder 4) eine Gelenkkette(8) bilden.

siehe Blatt -3a-

9. Vorrichtung nach Anspruch 8,

**dadurch gekennzeichnet,** daß mindestens ein Lenker(5) und ein Stützelement(3 oder 4) nicht parallel und nicht fluchtend auf ein Gleitlager(10) verschiebbar, stützend wirken oder eine gemeinsame Drehachse (6e) aufweisen.

10. Vorrichtung nach Anspruch 8 oder 9,

**dadurch gekennzeichnet,** daß mindestens zwei schräg und getrennt-symmetrisch zueinander angeordnete Lenker(5) zwischen Wagenkasten(7.2) oder Schwingbalken(11) und Drehgestell(1.2) wirkend, angelenkt oder verschiebbar gegen Stützelemente(3 oder 4) wirkend, gelagert sind.

11. Vorrichtung nach Anspruch 8 bis 10,

**dadurch gekennzeichnet,** daß das Gleitlager(10) Teil eines Stützkörpers oder Schwingbalkens(11) oder Fahrzeugkörpers(7) ist, der über einen Lagerzapfen(12) mit dem drehbar-gleitend aufgelagerten Wagenkasten(7.2) gekoppelt ist.

12. Vorrichtung nach einem der Ansprüche 1 bis 11,

**dadurch gekennzeichnet,** daß Fahrzeugkörper(7) Schiffseinbauten(7.3) darstellen und Fahrzeugstützkörper(1) Schiffsrümpfe darstellen, die über Lenker(5), Stützelemente(3 oder 4) oder Lagerelemente(2) derart zu Gelenkketten(8) gekoppelt sind, daß unerwünschte Relativbewegungen des Schiffsrumpfes(7.3) gegenüber Schiffsbauten(7.3) nahezu gänzlich kompensiert werden.

9.1 Verfahren und Vorrichtung nach den Ansprüchen 1 bis 8, dadurch gekennzeichnet, daß Körper (7,7.1...7n), (11) oder (1,1.1...1n) Gleitlager (10) aufweisen, durch welche sie in mindestens einer Richtung - auf eine geradlinige oder kurvenförmige Bewegungsbahn gezwungen, gegen oder über Stützelemente (3 oder 4) oder Lenker (5) wirkend - ausgelenkt werden.

9.2 Anspruch nach Anspruch 9.1, dadurch gekennzeichnet, daß Stützelemente (3 oder 4) oder Lenker (5) über getrennte Stütebenen jeweils relativ geschlossene Gelenkketten (8a) darstellen und derart gekoppelt sind, daß bei Aktivierung einer Gelenkkette (8a) diese nur synchron über mindestens eine weitere Gelenkkette (8) oder (8a) geöffnet wird.

9.3 Anspruch nach Anspruch 9.1 oder 9.2, dadurch gekennzeichnet, daß eine Gelenkkette (8a) jeweils nur relativ vollständig ein - oder ausgefahrene Stützelemente (3 oder 4) aufweist oder dadurch, daß sie jeweils quasie eine Hälfte einer Gelenkkette (8) darstellt.

9.4 Anspruch nach einem der Ansprüche 9.1 bis 9.3, dadurch gekennzeichnet, daß Stütelemente (3 oder 4) zweier Gelenkketten (8a) unterschiedliche Anstellwinkel ($\alpha$) aufweisend, auf verschiedene Kraftwirkungslinien ausgerichtet oder abgestimmt, oder jeweils gegenläufig wirkend, ausgebildet oder angeordnet sind.

9.5 Anspruch nach einem der Ansprüche 9.1 bis 9.4, dadurch gekennzeichnet, daß Lenker (5) auch zwischen ihren Gelenkenden (6a...6n) Drehachsen (6b...6n) aufweisen, an welchen sie angelenkt sind.

9.6 Anspruch nach einem der Ansprüche 9.1 bis 9.5, dadurch gekennzeichnet, daß die Kopplung zweier Gelenkketten (8a) über Leitungen (4b) erfolgt.

9.7 Anspruch nach einem der Ansprüche 9.1 bis 9.6, dadurch gekennzeichnet, daß Gleitlager (10) beliebig ausgebildet oder angeordnet, beliebig Kufenartige oder drehende Funktionen aufweisen und dadurch, daß sie beliebige anzeigende oder steuernde Elemente tragen oder damit beliebig gekoppelt sind.

9.8 Anspruch nach Anspruch 9.7, dadurch gekennzeichnet, daß Lenker (5) oder Stützelemente (3 oder 4) die Funktion von Gleitlagern (10) aufweisend, beliebig gekoppelt sind.

9.9 Anspruch nach den Ansprüchen 9.1 bis 9.8, dadurch gekennzeichnet, daß Drehachsen (6a...6n) beliebige, etwa exentrische Bewegungsbahnen erzeugen, wodurch vorhandene Funktion oder Konstruktionsprinzipien ausgetauscht, ersetzt oder ergänzt werden.

13. Vorrichtung nach Anspruch 12,

**dadurch gekennzeichnet,** daß beliebig viele Gelenkketten(8), in beliebigen Ebenen X, Y oder Z zusammenwirkend, ausreichend Gegen-, Rückstellkräfte aufbauend oder aufweisend dadurch möglich sind, daß die Rumpfteile(1.3) über eine Querverbindung aus Lenkern(5) stabilisiert bzw. auf konstantem Abstand gehalten werden.

14. Vorrichtung nach einem der Ansprüche 1 bis 13,

**dadurch gekennzeichnet,** daß Fahrzeugkörper(7) Flugzeugkabinen(7.4) und Flugzeugkabinen(4) darstellen, die über Lenker(5), Stützelemente(3 oder 4) oder Lagerelemente(2) derart Gelenkketten(8) bildend, gekoppelt sind, daß Relativbewegungen zwischen Kabine(7.4) und Rumpf(1.4) nahezu gänzlich kompensiert werden.

15. Vorrichtung nach einem der Ansprüche 1 bis 14,

**dadurch gekennzeichnet**, daß nur begrenzt Komponenten der Fahrzeugkörper(7) oder Fahrzeugstützkörper(1) über Gelenkketten(8) gekoppelt sind oder dadurch, daß verschiedene Gelenkketten-(8) kombiniert zur Anwendung kommen.

16. Vorrichtung nach einem der Ansprüche 1 bis 15,

**dadurch gekennzeichnet**, daß Lenker(5) beliebige stabartige Bauteile mit Gelenkenden. Stützelementen(3) beliebige 'Federn' und Stützelemente(4) beliebige Kolben-, Zylindersysteme, Ausgleichsgefäße(4a) Leitungen(4b) oder Massestromregler(4c) sind.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

RS

SA

7.2

S

Fz

1.2

<u>Fig. 14</u>

RS

SA

7.2

S

Fz

1.2

<u>Fig. 15</u>

_Fig. 16_

_Fig. 17_

Fig. 18

Fig. 12 a

Fig. 12 b

RS          SA    S

Fz

Fig. 12 c

RS          SA    S

Fz

Fig. 12 d

Fig. 12 e

RS  SA  S

Fz

RS  SA S

Fig. 12 f

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A- 501 533 (V. WEDELSTAEDT) <br><br> * Seite 1, Zeilen 75-96; Figuren 1-4 * | 1-3, 9.1- 9.5, 9.7- 9.9,15 | B 60 G 25/00 <br> B 60 G 21/00 <br> B 60 G 11/00 <br> B 60 B 9/00 <br> B 61 F 5/24 <br> B 63 B 29/02 <br> B 64 C 1/00 |
| Y | | 9.6,16 | |
| | -- | | |
| Y | DE-A-2 855 105 (SCHWARZ) <br><br> * Figuren 1-5 * | 9.6,16 | |
| | -- | | |
| X | GB-A- 164 336 (MERCIER) <br><br> * Seite 1, Zeile 75 - Seite 2, Zeile 69; Figuren 1-3 * | 1-4 | |
| Y | . | 5-7 | |
| A | | 9.1, 9.3 | RECHERCHIERTE SACHGEBIETE (Int. Cl.4) |
| | -- | | B 60 G |
| Y | FR-A- 359 561 (ETTINGHAUSEN) <br><br> * Seite 1, Zeile 13 - Seite 2, Zeile 19; Figuren 1,2 * | 5-7 | B 60 B <br> B 62 D |
| | -- | | |
| X | FR-A-1 101 975 (GUIDOBALDI) <br><br> * Seite 2, rechte Spalte, Zeile 5 - Seite 3, linke Spalte, Zeile 13; Figuren 2,3 * | 1,4,6 | |
| | -- | | |
| | ./. | | |

| Recherchenort | Abschlußdatum der Recherche | Prüfer |
|---|---|---|
| DEN HAAG | 10-01-1990 | TORSIUS |

Europäisches
Patentamt

---

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden.

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

---

## X MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1. Patentansprüche 1-3,9.1-9.9,15,16: Fahrzeugkörperaufhängung im allgemeinen.

2. Patentansprüche 4-7: Radaufhängung.

3. Patentansprüche 8-11: Wagenkästen- oder Swingbalkenaufhängung im Drehgestell.

4. Patentansprüche 12,13: Schiffseinbautenaufhängung im Schiffsrumpf.

5. Patentanspruch 14: Fluzeugeinbautenhängung im Flugzeugrumpf.

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind.

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche: 1-3,9.1-9.9,15,16

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
| X | FR-A-2 269 444 (DAIMLER-BENZ) <br><br> * Seite 3, Zeile 28 - Seite 4, Zeile 7; Figuren 10-13 * | 1-3, 15 | |
| A | | 4 | |
| | -- | | |
| X | US-A-2 142 173 (BROLUSKA) <br><br> * Seite 2, linke Spalte, Zeile 25 - rechte Spalte, Zeile 45; Figuren 1-10 * | 1-3, 15 | |
| | -- | | |
| X | FR-A-1 252 770 (MAROT) <br><br> * Figuren 1-4 * | 1-3, 15 | |
| | -- | | |
| X | DE-C- 868 699 (DAIMLER-BENZ) <br><br> * Seite 2, Zeilen 30-106; Figuren 1-6 * | 1-3 | RECHERCHIERTE SACHGEBIETE (Int. Cl.4) |
| A | | 4,7 | |
| | ---- | | |

| Recherchenort | Abschlußdatum der Recherche | Prüfer |
|---|---|---|
| | | |